(19) Europäisches Patentamt / European Patent Office / Office européen des brevets

(11) **EP 3 454 616 A1**

(12) **EUROPEAN PATENT APPLICATION**

(43) Date of publication:
**13.03.2019 Bulletin 2019/11**

(51) Int Cl.:
*H04W 64/00* (2009.01)  *H04W 36/08* (2009.01)

(21) Application number: **18193926.5**

(22) Date of filing: **12.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.09.2017 EP 17306174**

(71) Applicant: **InterDigital CE Patent Holdings**
**75017 Paris (FR)**

(72) Inventors:
• **VAN OOST, Koen**
  **2650 Edegem (BE)**
• **ABRAMOVITZ, Assi**
  **4220233 Netanya (IL)**

(74) Representative: **Ståhl, Björn Niclas**
**InterDigital CE Patent Holdings**
**20, rue Rouget de Lisle**
**92130 Issy-les-Moulineaux (FR)**

(54) **DEVICE AND METHOD FOR SIGNAL STRENGTH ESTIMATION IN A WIRELESS NETWORK WITH MULTIPLE ACCESS POINTS**

(57)     An RSSI predictor (240) in a wireless network (200) with multiple Access Points (220, 230) obtains AP beacon transmission power (S310), AP scan lists (S320), distances between APs (S330) and a first distance between a station (210) and its associated AP. If the first distance is above a threshold, the RSSI predictor (240) calculates (S360) a predicted second distance between the station and a non-associated AP, uses the second distance to predict (S370) a corresponding signal strength and provides (S380) the predicted signal strength to a network controller (250) that can perform handover (S390) based on the predicted signal strength.

| | |
|---|---|
| S310 | Obtain transmission power AP beacon |
| S320 | Obtain AP scan list(s) |
| S330 | Obtain distances between APs |
| S340 | Obtain distance d2 between STA and associated AP |
| S350 | Determine whether d2 is above threshold |
| S360 | Calculate estimated distance D between the non-associated AP and STA |
| S370 | Convert estimated distance D to predicted RSSI |
| S380 | Provide predicted RSSI to WLAN controller |
| S390 | Perform handover based on predicted RSSI |

300

Figure 3

EP 3 454 616 A1

**Description**

TECHNICAL FIELD

The present disclosure relates generally to wireless networks and in particular to wireless networks with multiple Access Points (APs).

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

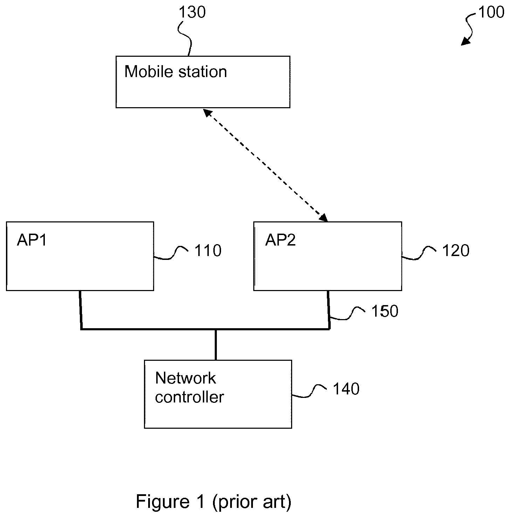

Figure 1 illustrates an exemplary conventional wireless local area network (WLAN) 100 with a plurality of wireless Access Points (APs) 110, 120 and a mobile station 130. The WLAN can for example be a Wi-Fi network compatible with IEEE 802.11, a Bluetooth® network or a cellular network. The mobile station 130 can for example be a personal computer, a mobile phone (smartphone) or a tablet.

In such a network, each AP advantageously operates using a channel, i.e. frequencies, distinct from the channel of other network APs in order to avoid interference, the mobile station 130 generally being wirelessly connected to a single AP, such as for example AP2 120. As is well known, there may be situations in which it could be preferable to hand over the mobile station to another AP, in this example AP1. Reasons for handing over the mobile station include: load balancing between APs, signal strength problems owing to for instance movement of the mobile station.

Within the network 100, handover (also called 'roaming') can be managed by a WLAN controller 140, which as illustrated may be a standalone device, but which also may be implemented on one of the APs 110, 120. The WLAN 140 and the APs are generally connected in a wired or wireless network 150 illustrated by solid line in Figure 1.

In order to manage handover, the WLAN controller 140 needs to know to which APs, a specific mobile station can be handed over. In the exemplary system in Figure 1, where there is a single alternative AP, the WLAN controller 140 needs to know if the mobile station can be handed over to the 'other' AP.

An important factor for the roaming determination is the expected signal strength, i.e. the expected received signal strength indicator (RSSI) between a mobile station and the AP to which it could be handed over.

A conventional method for obtaining expected RSSI for mobile stations is channel scanning or channel probing (also called off-channel scanning/probing). Using channel scanning, an AP has two options.

The AP can disconnect from its current channel, probe the RSSI of a mobile station in the channel of a different AP and then switch back to the original channel in time to handle data communication on the original channel. Problems with this solution is that it lowers performance by definition, and that it takes time, in particular if there are many mobile stations to probe using active scanning in which probe requests are sent and corresponding responses are waited for; the necessary time may not always be available. While it is possible to use passive scanning, this takes longer than active scanning since the responses are not provoked.

It will be appreciated that it is desired to have a solution that overcomes at least part of the conventional problems related to RSSI estimation in multi-AP wireless networks. The present principles provide such a solution.

SUMMARY OF DISCLOSURE

In a first aspect, the present principles are directed to a method for predicting a signal strength between a wireless station and an access point not associated with the wireless station in a wireless network. At least one hardware processor in a signal strength predictor obtains a first distance between the wireless station and its associated access point by converting a signal strength between the wireless station and the associated access point into a distance, and determines a predicted signal strength by converting a second distance between a non-associated access point and the wireless station into signal strength, the second distance determined from the first distance and a third distance between the associated access point and the non-associated access point.

In a second aspect, the present principles are directed to a device for signal strength prediction configured to predict a signal strength between a wireless station and an access point not associated with the wireless station in a wireless network. The device comprises at least one hardware processor configured to obtain a first distance between the wireless station and its associated access point by converting a signal strength between the wireless station and the associated access point into a distance, and determine a predicted signal strength by converting a second distance between a non-associated access point and the wireless station into signal strength, the second distance determined from the first distance and a third distance between the associated access point and the non-associated access point.

In a third aspect, the present principles are directed to a computer program comprising program code instructions executable by a processor for implementing the steps of a method according to any embodiment of the first aspect.

In a fourth aspect, the present principles are directed to a computer program product which is stored on a non-transitory computer readable medium and comprises program code instructions executable by a processor for implementing the steps of a method according to any embodiment of the first aspect.

BRIEF DESCRIPTION OF DRAWINGS

Preferred features of the present principles will now be described, by way of non-limiting example, with reference to the accompanying drawings, in which:

Figure 1 illustrates a conventional Wi-Fi Protected Access (WPA) Personal protocol;
Figure 2 illustrates an exemplary system according to an embodiment of the present principles; and
Figure 3 illustrates an exemplary method for according to an embodiment of the present principles.

DESCRIPTION OF EMBODIMENTS

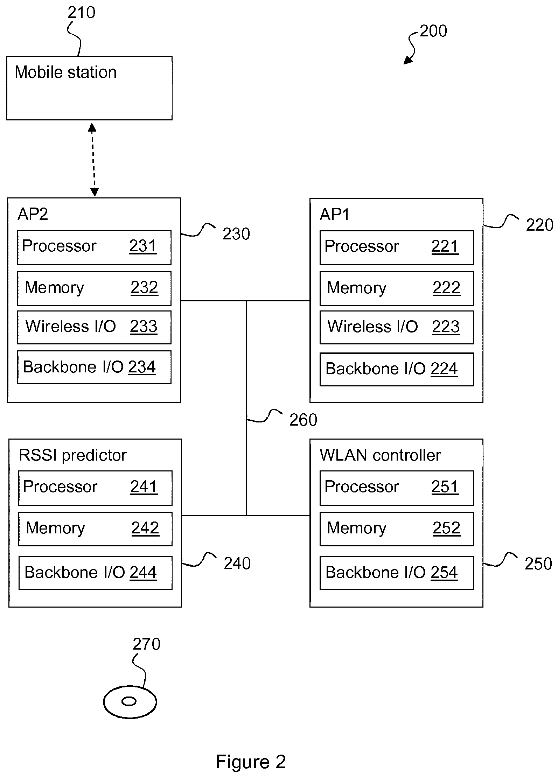

Figure 2 illustrates an exemplary system 200 according to an embodiment of the present principles. The system 200 includes a mobile station (STA) 210, a first access point (AP1) 220 and a second access point (AP2) 230 such as a gateway. The two access points 220, 230 are configured for wireless communication with mobile stations, e.g. using Wi-Fi according to IEEE 802.11. The system 200 further includes a signal strength estimation device 240 and a wireless LAN (WLAN) controller 250. The APs, the signal strength estimation device 240 and the WLAN controller 250 are connected by a connection 260, which preferably is wired but also can be wireless.

The mobile station 210 can be any kind of conventional device - mobile phone, tablet, sensor, etc. - compatible with the wireless communications standard used by the APs.

Each AP 220, 230 includes at least one hardware processing unit ("processor") 221, 231, memory 222, 232 and at least one wireless communications interface 223, 233, in the example a Wi-Fi interface, configured to communicate with other mobile stations, and a backbone interface 224, 234 configured for communication with the other devices connected to the connection 260. Any suitable communication standard, such as Wi-Fi (IEEE 802.11), Ethernet (IEEE 802.3), and PLC (power-line communication), could be used for the communication over the connection 260.

The APs 220, 230 are configured to operate on different channels, i.e. different frequencies, so as to avoid interference. The channel allocation, which preferably is dynamic, can be performed in any suitable conventional way.

The RSSI (i.e. signal strength) estimator device 240 and the WLAN controller 250 each include at least one hardware processing unit ("processor") 241, 251, memory 242, 252 and a backbone interface 244, 254 configured for communication with the other devices connected to the connection 260. The RSSI estimator device 240 and the WLAN controller 250 can be stand-alone devices or be implemented on another device in the system 200, such as on an AP, or in an external network, or in the Cloud.

The system could also include a gateway device (not shown) configured to connect the system 200 to an external network such as the Internet. The gateway device can be a stand-alone device, but it can also be implemented on one of the devices connected to the connection 260, for example an AP.

The memories 222, 232, 242, 252, which can be implemented as a plurality of memory circuits possibly of different types, are configured to store software instructions for execution by the respective processors 221, 231, 241, 251, and also for various data necessary for performing the respective functions described herein.

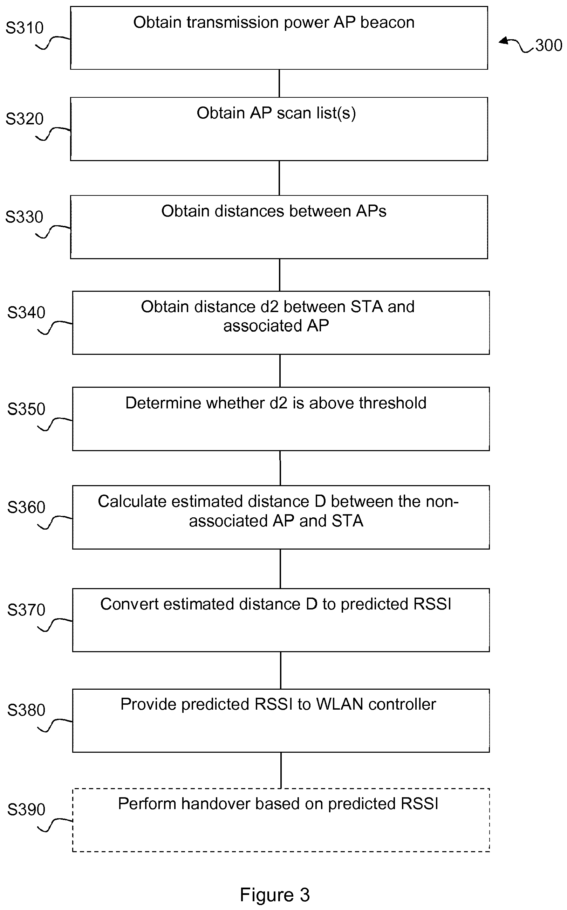

The skilled person will appreciate that the illustrated devices are very simplified for reasons of clarity and that real devices in addition would include features such as internal connections and power supplies. Non-transitory storage media 270 stores instructions that, when executed by processor 241, perform the functions of the RSSI predictor 240 as further described hereinafter with reference to Figure 3.

A salient point of the present principles is that the RSSI between a mobile station and a non-associated AP - in the example of Fig.2, STA 210 and AP1 220 - is predicted using passive information rather than being directly measured, as in the conventional solutions.

It is acknowledged that the accuracy of the RSSI prediction will typically not be very high, but conventional methods also have limited accuracy. However, high accuracy is not normally relevant as the predicted RSSI will be used as an approximation of the attenuation between a non-associated STA and an AP.

Figure 3 illustrates a flow chart for a method 300 of RSSI prediction at a RSSI predictor 240 according to an embodiment of the present principles.

In step S310, the processor 241 of the RSSI predictor 240 obtains the transmission power of the so-called "beacon" of each AP 220, 230. This transmission power is known and is generally dependent on the operator for the system 200. The WLAN controller 250 typically obtains the transmission power of the APs 220, 230 in the network 200 directly from the APs 220, 230.

In step S320, the processor 241 obtains at least one AP scan list. Generally, the processor 241 receives a scan list from each AP 220, 230 in the system 200. The AP scan list can be generated using any suitable conventional method. Typically, the AP scan list is generated when the system 200 boots and refreshed periodically by the APs 220, 230 or upon instruction by the WLAN controller 250. According to the present principles, the RSSI predictor 240 can be configured to initiate a refresh of the AP scan list.

The scan list typically includes entries for measurements with information about: the channel, the MAC address of an AP (Basic Service Set Identifier, BSSID), the network identifier (Service Set Identifier, SSID) and the signal strength, RSSI. An exemplary scan list from an AP can begin as follows:

| Channel | MAC (BSSID) | SSID | RSSI |
|---------|-------------|----------|---------|
| 1 | 00:00:00:00:00:01 | Network1 | -40 dBm |
| 2 | 00:00:00:00:00:02 | Network2 | -90 dBm |
| 3 | 00:00:00:00:00:03 | Network1 | -50 dBm |
| ... | ... | ... | ... |

Assuming that the AP that generated or refreshed the scan list is in Network1, it is possible, for the AP itself or the RSSI predictor 240, to determine the pathloss using the RSSI and the distance to the other APs in Network1. It is, in passing, noted that the scan list can include information related to all the beacons received by the AP, including APs of neighbouring networks.

In step S330, the processor 241 obtains the distance between the APs, by calculating the distance itself or by receiving the distance from the AP or APs that generated the at least one scan list. The distance can be calculated using any suitable conventional method for example using GPS coordinates (in case the APs are equipped to measure these) or based on more or less advanced propagation models for transmitted signals, but the distance can also be measured and input during installation of the APs.

The distance D between a non-associated AP and STA associated with an associated AP can be estimated as the distance d1 between the non-associated AP and the associated AP. However, this assumes that the STA and the associated AP practically are located in the same spot. It is likely that the STA and the associated AP are separated by a distance d2, which can be estimated from the RSSI for a signal from the STA received by the associated AP.

It is noted that an AP cannot always know whether a STA is issuing low transmission power or, for instance, is obstructed. The AP could determine via the PHY rate received from the STA whether abnormal RSSI is received or not. However, if this does not work, then the calculation will show that the predicted RSSI is bad, which is not an issue given the goal is to predict a rough RSSI not an accurate one. In this case, the AP can label the RSSI as "suspicious" or less accurate. In the end, the AP trying to predict the RSSI will then have to take care in using the predicted value. Note that RSSI accuracy improvement techniques (e.g. probing the STA or sending a ping) can improve the result, but if the RSSI remains suspicious then this is a practical issue that a system will have to cope with, but this is beyond the scope of the present principles.

In step S340, the processor 241 obtains the distance d2 between the STA and the associated AP, by calculating the distance d2 itself or by receiving the distance d2 from the associated AP.

In step S350, the processor 241 determines if the distance d2 is too large, i.e. above a threshold. As the accuracy of the D diminishes as d2 increases (see the different distances in step S360 hereinafter), it can be preferred to stop the method of RSSI estimation if d2 is too large since the possible values of D vary too much. Alternatively, the processor 241 can use the maximum distance (see step S360) in case d2 is above the threshold.

In an alternative, the processor 241 determines if the ratio between the distance d2 and the distance d1 is above a threshold. A rationale for this is that the bigger d2 is compared to d1, the bigger its relative impact will be on D. In case the ratio is above the threshold, it can be preferred to stop the method, but it is also possible to use the maximum distance, as explained above.

In step S360, the processor 241 determines at least one estimated distance D between the non-associated AP and STA, for example by calculating it as follows:

- $D = d1 - d2$ (minimum distance: STA is directly between the APs)
- $D = d1 + d2$ (maximum distance: STA is on the far side of the associated AP)
- $D = \sqrt{d1^2 + d2^2}$ (STA is at a right angle from the line between the APs).

In step S370, the processor 241 converts the at least one estimated distance D into a predicted RSSI. This is the opposite of obtaining a distance from the RSSI and it can thus be done using the inverse formula (at least for some of the formulae).

In step S380, the processor 241 provides the predicted RSSI to the backbone interface 244 for transmission via the connection 260 to the WLAN controller 250.

It is noted that the processor 241 preferably provides to the WLAN controller a predicted RSSI for a plurality of (preferably all) combinations of mobile stations and non-associated APs.

In step S390 (that, as indicated by a dashed line, is not part of the estimation method since it is performed by the WLAN controller), the processor 251 of the WLAN controller 250 uses the at least one predicted RSSI for roaming decisions, possibly handing over at least one mobile station.

It is preferred that the RSSI predictor 240 obtains the measured RSSI between a mobile station and a now-associated AP after handover. The processor 241 then stores the measured RSSI in the memory 242 together with the corresponding predicted RSSI. Through analysis of measured and predicted RSSIs, it can be possible to determine patterns for APs and then adjust the RSSI estimation accordingly for future estimates. For example, in case AP1 and AP2 are in opposite corners of an open space (without outside spaces such as balconies), then it can for example be assumed that D is always smaller than d1, which then can be set as a maximum distance (rather than d1+d2).

As will be appreciated, the present principles can provide RSSI estimates based on available information without requiring an AP to switch channels, and the principles can also be chipset independent.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

**Claims**

1. A method (300) for predicting a signal strength between a wireless station (210) and an access point (220, 230) not associated with the wireless station (210) in a wireless network (200), the method comprising in at least one hardware processor (241) in a signal strength predictor (240):

   - obtaining (S340) a first distance (d2) between the wireless station (210) and its associated access point (220, 230) by converting a signal strength between the wireless station (210) and the associated access point (220, 230) into a distance; and
   - determining (S370) a predicted signal strength by converting a second distance (D) between a non-associated access point (220, 230) and the wireless station into signal strength, the second distance determined from the first distance (d2) and a third distance between the associated access point (220, 230) and the non-associated access point (220, 230).

2. The method of claim 1, further comprising providing (S380) the predicted signal strength to a network controller (250) configured to perform handover of wireless stations (210) in the network (200).

3. The method of claim 1, wherein the wireless station (210) and the associated access point (220, 230) communicate using a first channel that is different from a second channel used by the non-associated access point for communication.

4. The method of claim 1, further comprising:

   - obtaining (S310) transmission powers of beacons of the access points (220, 230);
   - obtaining (S320) scan lists from the access points (220, 230); and
   - obtaining (S330) a distance between each pair of access points (220, 230).

5. The method of claim 1, further comprising determining (S350) if the first distance is below a threshold value.

6. The method of claim 5, wherein the calculating is performed only in case the first distance is below the threshold value.

7. The method of claim 5, further comprising using an estimated distance equal to a sum of the first distance and the third distance in case the first distance is above the threshold value.

8. The method of claim 1, further comprising calculating a ratio between the first distance and the third distance, wherein the calculating is performed only in case the ratio is below a threshold value.

9. A device for signal strength prediction (240) configured to predict a signal strength between a wireless station (210) and an access point (220, 230) not associated with the wireless station (210) in a wireless network (200), device for signal strength prediction (240) comprising at least one hardware processor (241) configured to:

   - obtain a first distance (d2) between the wireless station (210) and its associated access point (220, 230) by converting a signal strength between the wireless station (210) and the associated access point (220, 230) into a distance; and
   - determine a predicted signal strength by converting a second distance (D) between a non-associated access point (220, 230) and the wireless station into signal strength, the second distance determined from the first distance (d2) and a third distance between the associated access point (220, 230) and the non-associated access point (220, 230).

10. The device of claim 9, further comprising a hardware interface (244) configured to provide the predicted signal strength to a network controller (250) configured to perform handover of wireless stations (210) in the network (200).

11. The device of claim 9, wherein the wireless station (210) and the associated access point (220, 230) communicate using a first channel that is different from a second channel used by the non-associated access point for communication.

12. Computer program comprising program code instructions executable by a processor for implementing the steps of a method according to at least one of claims 1 to 8.

13. Computer program product which is stored on a non-transitory computer readable medium and comprises program code instructions executable by a processor for implementing the steps of a method according to at least one of claims 1 to 8.

130

100

Mobile station

AP1 ～ 110

AP2 ～ 120

～ 150

Network
controller ～ 140

Figure 1 (prior art)

210

Mobile station

200

AP2

| Processor | 231 |
| Memory | 232 |
| Wireless I/O | 233 |
| Backbone I/O | 234 |

230

AP1

| Processor | 221 |
| Memory | 222 |
| Wireless I/O | 223 |
| Backbone I/O | 224 |

220

260

RSSI predictor

| Processor | 241 |
| Memory | 242 |
| Backbone I/O | 244 |

240

WLAN controller

| Processor | 251 |
| Memory | 252 |
| Backbone I/O | 254 |

250

270

Figure 2

S310 — Obtain transmission power AP beacon

300

S320 — Obtain AP scan list(s)

S330 — Obtain distances between APs

S340 — Obtain distance d2 between STA and associated AP

S350 — Determine whether d2 is above threshold

S360 — Calculate estimated distance D between the non-associated AP and STA

S370 — Convert estimated distance D to predicted RSSI

S380 — Provide predicted RSSI to WLAN controller

S390 — Perform handover based on predicted RSSI

Figure 3

Europäisches
Patentamt

European
Patent Office

Office européen
des brevets

## EUROPEAN SEARCH REPORT

Application Number

EP 18 19 3926

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 200 375 A2 (KOREA ELECTRONICS TELECOMM [KR]) 23 June 2010 (2010-06-23) * paragraphs [0016], [0026], [0031], [0043], [0044], [0060], [0061], [0065], [0088]-[0092]; figures 2-5, 11 * | 1-13 | INV. H04W64/00  ADD. H04W36/08 |
| A | US 2015/304929 A1 (HUA SHA [US] ET AL) 22 October 2015 (2015-10-22) * paragraphs [0001], [0005], [0006], [0025]-[0027], [0031]-[0033], [0039], [0055]-[0057], [0063], [0068]-[0071], [0073]-[0077], [0087]-[0090], [0109]-[0111]; figures 1-3, 6, 7, 10-12 * | 1-13 | |
| A | US 2009/103503 A1 (CHHABRA KAPIL [US]) 23 April 2009 (2009-04-23) * paragraphs [0004]-[0010], [0028]-[0037], [0040]-[0046], [0050]-[0058]; figures 1-5 * | 1-13 | |
| A | EP 2 046 082 A1 (BRITISH TELECOMM [GB]) 8 April 2009 (2009-04-08) * paragraphs [0005], [0006], [0008], [0043], [0044]; figures 1-3 * | 1-13 | TECHNICAL FIELDS SEARCHED (IPC)  H04W |

The present search report has been drawn up for all claims

| Place of search | Date of completion of the search | Examiner |
|---|---|---|
| Munich | 15 October 2018 | Murgan, Tudor A. |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

 

& : member of the same patent family, corresponding
　　document

EPO FORM 1503 03.82 (P04C01)

## ANNEX TO THE EUROPEAN SEARCH REPORT
## ON EUROPEAN PATENT APPLICATION NO.

EP 18 19 3926

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2018

| Patent document cited in search report | | Publication date | Patent family member(s) | | Publication date |
|---|---|---|---|---|---|
| EP 2200375 | A2 | 23-06-2010 | EP 2200375 A2<br>KR 20100069278 A | | 23-06-2010<br>24-06-2010 |
| US 2015304929 | A1 | 22-10-2015 | US 2015304929 A1<br>WO 2015164114 A1 | | 22-10-2015<br>29-10-2015 |
| US 2009103503 | A1 | 23-04-2009 | CN 101836486 A<br>US 2009103503 A1<br>US 2013094390 A1<br>US 2014105197 A1<br>WO 2009055304 A1 | | 15-09-2010<br>23-04-2009<br>18-04-2013<br>17-04-2014<br>30-04-2009 |
| EP 2046082 | A1 | 08-04-2009 | NONE | | |

EPO FORM P0459

For more details about this annex : see Official Journal of the European Patent Office, No. 12/82